# EUROPEAN PATENT APPLICATION

(11) **EP 4 163 549 A2**
(43) Date of publication of application: **12.04.2023**
(21) Application number: 22199651.5
(22) Date of filing: 04.10.2022
(51) Int. Cl.: F23R 3/28, B23P 17/00

(54) **THREADED JOINTS FOR FLUID INJECTION COMPONENTS**

(30) Priority: 05.10.2021 US 202117494573
(71) Applicant: Collins Engine Nozzles, Inc., West Des Moines, IA 50265 (US)
(72) Inventor: RYON, Jason A., Carlisle, 50047 (US); PFEFFER, Brett A., Granger, 50109 (US); SCHNOEBELEN, Pete J., West Des Moines, 50265 (US)
(74) Representative: Dehns

(57) **Abstract**

A method of making a threaded inlet fitting (120) on a fluid injection component for a gas turbine engine includes depositing material onto a piece of tube stock (102). The method includes machining threads (106) into the deposited material. Depositing can include laser cladding the material onto the piece of tube stock (102). The piece of tube stock (102) can be a feed arm (103) of a fluid injector.

## Description

### BACKGROUND

### 1. Field

The present disclosure relates generally to fluid injection components, and more particularly to fluid injectors for gas turbine engines.

### 2. Description of Related Art

Fluid injectors for gas turbine engines usually have threaded inlet fittings to connect to a fluid manifold. In an assembly, the inlet fitting is a separate component which must be brazed to the feed arm or fluid tube. The conventional techniques have been considered satisfactory for their intended purpose. However, there is an ever present need for improved systems and methods for improved fluid injection components and methods of making fluid injection components. This disclosure provides a solution for this need.

### SUMMARY

A method of making a threaded inlet fitting on a fluid injection component for a gas turbine engine includes depositing material onto a piece of tube stock. The method includes machining threads into the deposited material.

Depositing can include laser cladding, electron beam cladding, cold spaying, and/or plasma spraying the material onto the piece of tube stock. Depositing material can include depositing material proximate an axial end of the piece of tube stock. Depositing material can include depositing material around a whole circumference of an outer surface of the piece of tube stock. Machining threads can include machining the threads on an outward facing surface of the deposited material. The method can include threading the threads to a fluid system component of a gas turbine engine. The fluid system component can be a fluid manifold of the gas turbine engine.

Depositing material can include depositing material proximate a first axial end of the piece of tube stock. The method can include joining a nozzle component to a second axial end of the piece of tube stock opposite the first axial end. A passage for fluid can extend through the threads and piece of tube stock and into the nozzle component.

The method can include machining wrench flats into the deposited material. The piece of tube stock can be of a first material, and depositing material can include depositing a non-galling material onto the first material. The piece of tube stock can be of a material that is less durable and resistant to galling than the deposited material. The method can include assembling a mounting flange onto the piece of tube stock.

A fluid injector includes a feed arm and a threaded inlet fitting. A metallurgical joint joins the feed arm to the threaded inlet fitting. The metallurgical joint includes a metallurgical crystal structure including only one crystal structure boundary between the feed arm and the threaded inlet fitting.

The crystal structure boundary can be devoid of braze. The threaded inlet fitting can be proximate a first axial end of the feed arm. A nozzle component can be joined to a second axial end of the feed arm opposite the first axial end. A set of wrench flats can be defined in the threaded inlet fitting A mounting flange can be assembled to the feed arm proximate the threaded inlet fitting. A passage for fluid can extend through the threads and piece of tube stock and into the nozzle component.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Figs. 1-2 are schematic cross-sectional elevation views of respective stages in a process in accordance with the present disclosure, showing deposition of material for forming a threaded inlet fitting on feed arm in a fluid injection component;
Fig. 3-4 are schematic elevation views of respective two more stages in the process in of Figs. 1-2, showing machining the deposited material into a threaded inlet fitting and adding a flange and nozzle; and
Fig. 5 is is a schematic cross-sectional view of a metallurgical joint in accordance with the present disclosure, showing the metallurgical boundary between the tube of feedstock and the deposited material.

### DETAILED DESCRIPTION OF THE PREFERRED EMBODIMENTS

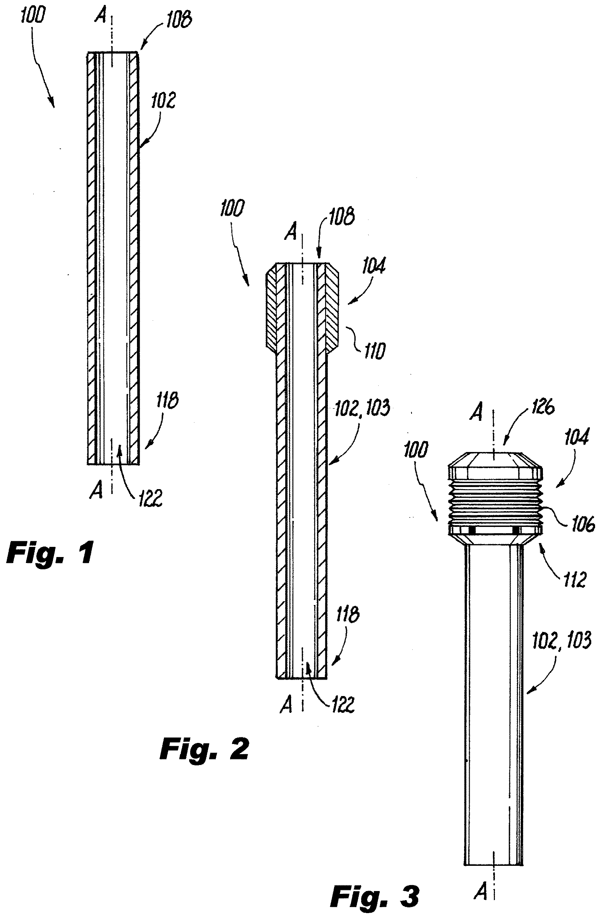

Reference will now be made to the drawings wherein like reference numerals identify similar structural features or aspects of the subject disclosure. For purposes of explanation and illustration, and not limitation, a partial view of an embodiment of a fluid injector in accordance with the disclosure is shown in Fig. 1 and is designated generally by reference character 100. Other embodiments of systems in accordance with the disclosure, or aspects thereof, are provided in Figs. 2-5, as will be described. As used herein, an item is proximate a position if it is near and/or at the position. The systems and methods described herein can be used to construct threaded inlet fittings on fluid injectors and other fluid injection components such as used in gas turbine engines.

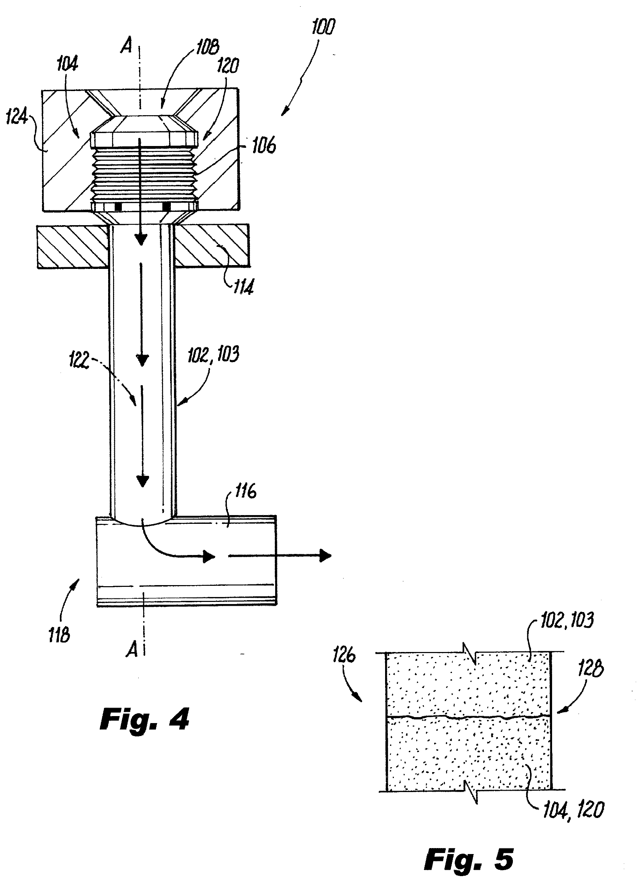

In a method in accordance with this disclosure includes beginning with a piece of tube stock 102, as shown in Fig. 1. The piece of tube stock defines an axis A and will eventually become a feed arm 103 of a fluid injector 100 as labeled in Fig. 4. The method includes depositing material 104 onto the piece of tube stock 102, as shown in Fig. 2. Depositing material 104 includes laser cladding the material onto the piece of tube stock 102 proximate a first axial end 108 of the piece of tube stock 102, and around a whole circumference of an outer surface of the piece of tube stock 102, relative to axis A. While laser cladding is discussed herein, those skilled in the art will readily appreciate that any other suitable deposition process can be used such as (but not limited to) electron beam cladding, cold spaying, or plasma spraying. The piece of tube stock can be of a first material, and depositing material 104 can include depositing a second material onto the first material. The first and second materials can be the same or different materials. For example, the piece of tube stock 102 can be of 300 stainless steel, and the deposited material 104 can be of a non-galling material such as a 400SS alloy.

With reference now to Fig. 3, after depositing material 104, the method includes machining threads 106 into the deposited material 104, on an outward facing surface 110 (labeled in Fig. 2) of the deposited material 104. The method can also include machining wrench flats 112 into the deposited material 104.

With reference now to Fig. 4, the method can include assembling a mounting flange 114 onto the piece of tube stock 102 proximate the first axial end 108 of the piece of tube stock 102. The method includes joining a nozzle component 116 to a second axial end 118 of the piece of tube stock 102 opposite the first axial end 108. Those skilled in the art will readily appreciate that the nozzle component 116 and the mounting flange 114 can optionally be assembled to the piece of tube stock 102 as early as prior to depositing the material 104 of Fig. 2.

With continued reference to Fig. 4, the fluid injector 100 includes a feed arm 103 and the threaded inlet fitting 120 machined from the deposited material 104. A passage 122 for fluid such as liquid fuel, gas fuel, or air, extends through the threads 106 and piece of tube stock 102 and into the nozzle component 116 for fluid injection as indicated in Fig. 4 by the flow arrows. The threads 106 can be threaded to a fluid system component of a gas turbine engine, such as a fluid manifold 124.

With reference now to Fig. 5, a metallurgical joint 126 joins the feed arm 103 to the threaded inlet fitting 120. The metallurgical joint 126 includes a metallurgical crystal structure including only one boundary 128 that has a crystal structure, between the feed arm 103 and laser clad material 104 of the threaded inlet fitting 120. The crystal structure boundary 128 is devoid of braze because the material 104 is laser clad directly onto the feed arm 103.

While shown and described herein in the exemplary context of a threaded fitting for a fluid injector, those skilled in the arts will readily appreciate that systems and methods as disclosed herein can be applied to threaded fittings for other fluid injection related components without departing from the scope of this disclosure. Potential benefits of the systems and methods disclosed herein include the following. Elimination of the inlet fitting as a separate piece that is brazed to the feed arm can save cost because of elimination of the inlet fitting component and removal of a braze joint from the final fluid injection component. Material for the threads can be different than the base material, which is useful for making threads harder or galling less than the base material, while the base material may be more inexpensive or have different thermal characteristics for thermal expansion or better brazing to other joints. Those skilled in the art will readily appreciate that any other suitable joining technique besides brazing can be used, such as welding.

The methods and systems of the present disclosure, as described above and shown in the drawings, provide for construction of threaded inlet fittings on fluid injectors and other fluid injection components such as used in gas turbine engines. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A method of making a threaded inlet fitting on a fluid injection component for a gas turbine engine comprising:
depositing material onto a piece of tube stock (102); and
machining threads (106) into the deposited material.

2. The method as recited in claim 1, wherein depositing includes laser cladding, electron beam cladding, cold spaying, and/or plasma spraying the material onto the piece of tube stock (102).

3. The method as recited in claim 1 or 2, wherein the piece of tube stock (102) is a feed arm (103) of a fluid injector.

4. The method as recited in claim 1, wherein depositing material includes depositing material proximate an axial end of the piece of tube stock (102).

5. The method as recited in claim 1, wherein depositing material includes depositing material around a whole circumference of an outer surface of the piece of tube stock (102), and preferably wherein machining threads includes machining the threads on an outward facing surface of the deposited material.

6. The method as recited in any preceding claim, further comprising threading the threads (106) to a fluid system component of a gas turbine engine, and preferably wherein the fluid system component is a fluid manifold of the gas turbine engine.

7. The method as recited in claim 1, wherein depositing material includes depositing material proximate a first axial end of the piece of tube stock, and further comprising joining a nozzle component (116) to a second axial end of the piece of tube stock opposite the first axial end.

8. The method as recited in claim 7, wherein a passage (122) for fluid extends through the threads (106) and piece of tube stock (102) and into the nozzle component (116).

9. The method as recited in any preceding claim, further comprising machining wrench flats (112) into the deposited material.

10. The method as recited in any preceding claim, wherein the piece of tube stock (102) is of a first material, and depositing material includes depositing a non-galling material onto the first material, and preferably wherein the piece of tube stock (102) is of a material that is less durable and resistant to galling than the deposited material.

11. The method as recited in any preceding claim, further comprising assembling a mounting flange (114) onto the piece of tube stock (102).

12. A fluid injector comprising:
a feed arm (103);
a threaded inlet fitting (120); and
a metallurgical joint (126) joining the feed arm (103) to the threaded inlet fitting (120), wherein the metallurgical joint (126) includes a metallurgical crystal structure including only one crystal structure boundary (128) between the feed arm (103) and the threaded inlet fitting (120).

13. The fluid injector as recited in claim 12, wherein the crystal structure boundary (128) is devoid of braze, and preferably wherein the feed arm (103) is of a material that is less durable and resistant to galling than that of the threaded inlet fitting (120).

14. The fluid injector as recited in claim 12 or 13, wherein the threaded inlet fitting (120) is proximate a first axial end (108) of the feed arm (103), and further comprising a set of wrench flats (112) defined in the threaded inlet fitting, and preferably further comprising:
a nozzle component (116) joined to a second axial end (118) of the feed arm (103) opposite the first axial end (108); and
a mounting flange (114) assembled to the feed arm (103) proximate the threaded inlet fitting (120).

15. The fluid injector as recited in any of claims 12-14, wherein a passage (122) for fluid extends through the threads (106) and piece of tube stock (102) and into the nozzle component (116).
